# EUROPÄISCHE PATENTSCHRIFT

(11) **EP 0 577 617 B1**
(45) Veröffentlichungstag und Bekanntmachung des Hinweises auf die Patenterteilung: **06.12.1995**
(21) Anmeldenummer: 92905476.5
(22) Anmeldetag: 24.02.1992
(51) Int. Cl.: F16B 7/14, F16C 7/06

(54) **AUSGLEICHSANORDNUNG**
COMPONENT-ALIGNMENT DEVICE
DISPOSITIF D'ALIGNEMENT A COMPENSATION

(30) Priorität: 26.03.1991 DE 4109952
(43) Veröffentlichungstag der Anmeldung: 12.01.1994
(73) Patentinhaber: SPRINGFIX-Befestigungstechnik GmbH, D-73084 Salach (DE)
(72) Erfinder: SCHNEIDER, Erhard, D-7900 Ulm-Ermingen (DE)
(74) Vertreter: Bardehle, Heinz, Dipl.-Ing.
(86) Internationale Anmeldenummer: EP9200385
(87) Internationale Veröffentlichungsnummer: WO9217707

(56) Entgegenhaltungen:
- FR-A- 1 445 932
- FR-A- 2 158 690
- FR-A- 2 363 023
- FR-A- 2 375 482
- GB-A- 118 411
- GB-A- 2 010 378

## Beschreibung

Die vorliegende Erfindung betrifft eine Ausgleichsanordnung gemäß dem Oberbegriff des Anspruchs 1.

Es ist eine gattungsgemäße Ausgleichsanordnung bekannt (DE-U-84 08 856), bei der außenseitig einer geschlitzten Gewindehülse mindestens ein verschiebbarer Ring unter Spannung angeordnet ist. Die Gewindehülse hat ein Innengewinde, in das ein mit Außengewinde versehener Schaft geschraubt ist. Eine axiale Verstellung wird durch Drehen des Schaftes gegenüber der Gewindehülse erzielt und eine Fixierung durch Verschieben des Ringes über den verschraubten Bereich.

Das bekannte Verbindungselement ist meist sowohl an der Hülse als auch an dem Schaft mit einer Kugelpfanne versehen, so daß eine axiale Verstellung nicht kontinuierlich, sondern nur abschnittsweise proportional zu einer Umdrehung des Schaftes in der Hülse möglich ist. Die Gewindehülse ist durchgängig geschlitzt, so daß die Verschraubung in diesem Bereich offen liegt und Verschmutzung ausgesetzt ist, wodurch das Gewinde leicht zerstört werden kann. Nachteilig ist bei dieser bekannten Anordnung auch, daß der Ring leicht unabsichtlich verschoben wird, so daß die axiale Einstellung nicht mehr fixiert ist. Die Handhabung des Verbindungselementes zur axialen Verstellung ist aufwendig, da selbst für geringe axiale Verstellungen viele Umdrehungen des Schaftes gegenüber der Hülse notwendig sind, und - sofern der Schaft endseitig mit einer Kugelpfanne versehen ist, diese für jede neue axiale Justierung von der entsprechenden Kugel abgenommen werden muß.

Aus der DE-C-28 48 955 ist auch eine Verbindungsanordnung bekannt, bei der zwei radial gerillte Verbindungsstangen durch zwei längsgeschlitzte, übereinandergestülpte Muffen radial und axial gehalten werden. Auch diese Anordnung ist nicht nur aufwendig in der Herstellung, sondern auch umständlich zu bedienen.

Es ist die Aufgabe der Erfindung, eine Ausgleichsanordnung anzugeben, die einfach zu bedienen und herzustellen ist.

Diese Aufgabe wird durch eine Ausgleichsanordnung mit den Merkmalen des Anspruchs 1 gelöst.

Die erfindungsgemäße Ausgleichsanordnung ist insbesondere dann von Vorteil, wenn durch sie eine festgelegte Entfernung zwischen zwei Bauteilen eingestellt und gleichzeitig durch die Ausgleichsanordnung eine gewisse Haltefunktion ausgeübt werden soll. So kann z. B. bei der druckbelasteten Version der Ausgleichsanordnung ein zu haltendes Element zwischen der Anordnung und einem der bezüglich der Entfernung festzulegenden Bauteile eingespannt werden oder es kann ein zu haltendes Element durch die Federkraft zwischen einem der bezüglich der Entfernung festzulegenden Bauelemente und einem Anschlag festgelegt werden. Für die zugbelastete Version der Ausgleichsanordnung gilt entsprechendes.

Durch diese von der Ausgleichsanordnung ausgeübte Feder- und damit Haltewirkung kann z. B. erreicht werden, daß ein Monteur beide Hände frei hat, um die Stange bezüglich der Hülse axial durch die Klemmeinrichtung festzulegen.

Bei einer bevorzugten Ausführungsform hat die Hülse eine axiale Vertiefung, in der die Stange axial geführt wird, so daß die Gefahr von Verschmutzungen und damit die Gefahr eines erhöhten Abriebs zwischen Stange und Hülse vermieden wird.

Weitere bevorzugte Ausführungsformen der Erfindung sind in den Unteransprüchen angegeben. Die Unteransprüche 3 und 4 geben dabei für die druck- bzw. für die zugbelastete Version der Ausgleichsanordnung bevorzugte Ausgestaltungen der Federeinrichtung und ihres Zusammenwirkens mit Hülse und Stange an. Die Ausgestaltung gemäß Anspruch 6 gibt eine besonders bevorzugte Ausführungsform der Klemmeinrichtung an. Bei der darüber hinaus bevorzugten Ausgestaltung gemäß Anspruch 8 wird durch die Zwischenschaltung eines Tellerfederpaketes gewährleistet, daß mit der durch die Tellerfeder aufgebrachten Vorspannung eine permanent gleichmäßige Anpressung der Sperrscheibe auf die Welle vorliegt. Dies ist insbesondere dann vorteilhaft, wenn die Hülse und/oder die Mutter aus Kunststoff hergestellt sind, da der Kunststoffwerkstoff bei ständiger Belastung zum Kriechen neigt, wodurch die Vorspannung ohne Einschaltung des Tellerfederpaketes mit der Zeit abfallen kann, was zur Beeinträchtigung der Funktion führen könnte.

Nachstehend wird die Erfindung beispielhaft unter Bezugnahme auf die beigefügte Zeichnung beschrieben.
- Fig. 1: zeigt eine Ausführungsform der erfindungsgemäßen Ausgleichsanordnung in einer teilweise geschnittenen Seitenansicht;
- Fig. 2: zeigt einen Teil einer zweiten Ausführungsform einer erfindungsgemäßen Ausgleichsanordnung in einer Teil-Schnittansicht von der Seite;
- Fig. 3: zeigt eine Detailansicht einer weiteren Ausführungsform der erfindungsgemäßen Ausgleichsanordnung einer teilweise geschnittenen Seitenansicht, wobei die Klemmeinrichtung in einem entspannten Zustand gezeigt ist;
- Fig. 4: zeigt eine Detailansicht der weiteren Ausführungsform gemäß Figur 3 in einer teilweise geschnittenen Seitenansicht, und zwar im gespannten Zustand der Klemmeinrichtung;

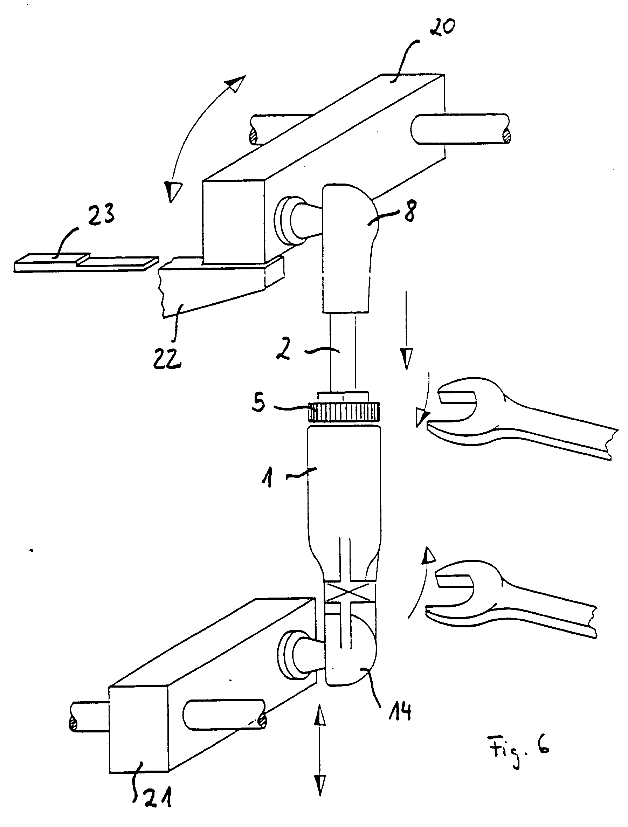

- Fig. 5: zeigt eine Drauf- und eine Seitenansicht der Klemmscheibe; und
- Fig. 6: ist eine schematische Darstellung, die ein Anwendungsbeispiel der Ausgleichsanordnung gemäß Figur 2 zeigt.

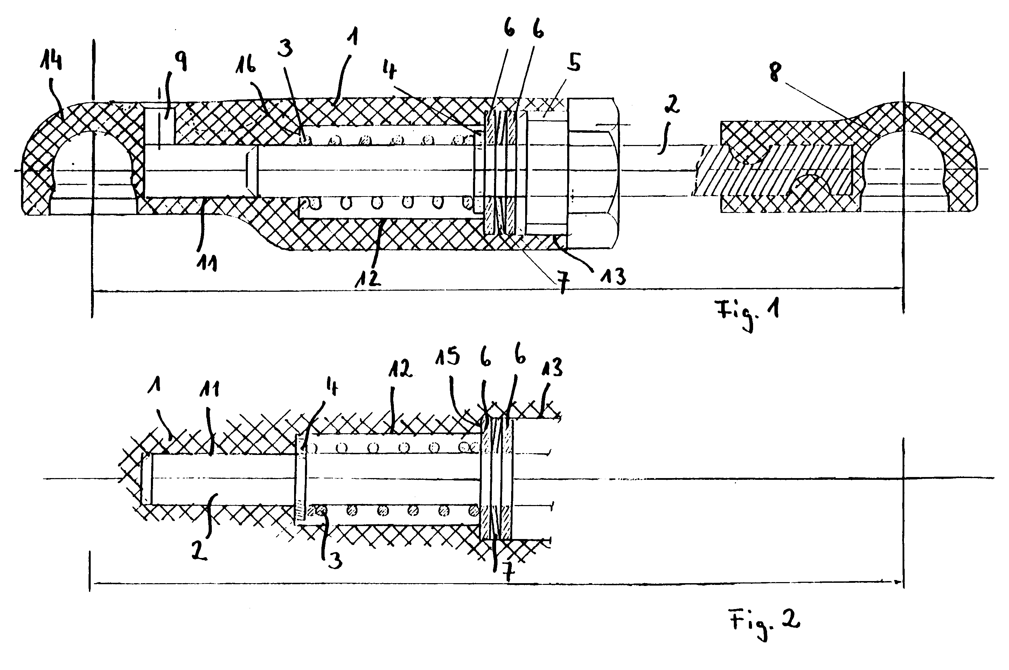

In Fig. 1 ist als erstes Ausführungsbeispiel eine druckbelastete bzw. - belastbare erfindungsgemäße Ausgleichsanordnung gezeigt, welche bei Vergasern und Einspritzpumpen verwendet wird, um dort auftretende Toleranzen eines Gestänges zur Betätigung des Vergasers bzw. der Einspritzpumpe auszugleichen. Hierzu ist bei einer aus Kunststoff geformten Hülse 1 der Ausgleichsanordnung an einem Ende ein Kugelpfannenansatz 14 vorgesehen. Eine in der Hülse 1 axial verschiebbare Stange 2 hat an ihrem der Hülse 1 abgewandten Ende ein Kugelpfannenelement 8 aus Kunststoff aufgespritzt.

Die Hülse 1 hat eine von dem dem Kugelpfannenansatz 14 entgegengesetzten Ende ausgehende axiale Sackbohrung, die in axialer Richtung in drei Abschnitte unterteilt ist, nämlich einen zu der Bohrungsöffnung benachbarten Innengewindeabschnitt 13, einen dahinterliegenden Federaufnahmeabschnitt 12 und einen noch dahinterliegenden Stangenführungsabschnitt 11. Die Durchmesser der drei Abschnitte 11, 12 und 13 sind unterschiedlich, wobei der Durchmesser des Stangenführungsabschnittes 11 etwa dem Durchmesser der Stange 2 entspricht, so daß diese in dem Stangenführungsabschnitt 11 geführt werden kann. Der mittlere Federaufnahmeabschnitt 12 hat einen etwas größeren Durchmesser als der Stanmenführungsabschnitt 11 und der äußerste Gewindeabschnitt 13 hat einen noch größeren Durchmesser als der Federaufnahmeabschnitt 12. Die Abschnitte 11, 12 und 13 gehen über Absätze 15, 16 ineinander über.

Die Stange 2 ist so weit in die Hülse 1 eingeschoben, daß ihr Ende gerade von dem Stangenführungsabschnitt 11 aufgenommen wird. Die Stange hat in dieser Position etwa auf der Höhe des Absatzes 15 zwischen Federaufnahmeabschnitt 12 und Gewindeabschnitt 13 eine radiale Ausnehmung, in die ein Federring bzw. Sprengring 4 eingesetzt ist. Auf die Stange 2 ist eine Feder 3 aufgeschoben und zwischen dem Federring 4 und dem Absatz 16 eingespannt, der den Übergang zwischen Stangenführungsabschnitt 11 und Federaufnahmeabschnitt 12 bildet.

In den Gewindeabschnitt 13 sind zwei Unterlegscheiben 6 mit dazwischen liegender Radialklemmscheibe 7 eingelegt und von einer in den Gewindeabschnitt 13 geschraubten Mutter 5 gegen den Absatz 15 zwischen Federaufnahmeabschnitt 12 und Gewindeabschnitt 13 gehalten. Die die Mutter 5 nicht berührende Unterlegscheibe 6 bietet somit eine Anlage für den Federring 4, so daß die Stange 2 nicht mehr aus der Hülse 1 herausgezogen werden kann.

Es ist klar, daß die Unterlegscheiben 6, die Radialklemmscheibe 7 als auch die Mutter 5 mit mittigen Durchgangsöffnungen versehen sein müssen, damit die Stange 2 durch sie hindurchgeschoben werden kann.

Die Hülse 1 ist bei diesem Ausführungsbeispiel, wie gesagt, aus Kunststoff und die Stange 2 besteht aus Metall. Gute gleitende Eigenschaften zwischen Hülse 1 und Stange 2 werden erreicht, wenn in die Sackbohrung der Hülse 1 etwas Öl gegeben wird.

Die in Fig. 1 gezeigte radiale Öffnung 9 der Sackbohrung der Hülse 1 an deren Ende ist normalerweise nicht notwendig. Falls mit Fett geschmiert wird, soll durch die radiale Öffnung 9 verhindert werden, daß beim Eindrücken der Stange 2 in die Hülse 1 ein nicht überwindbarer Druck in dem Stangenführungsabschnitt 11 entsteht. Gleichzeitig kann durch diese radiale Öffnung 9 auch Fett zugeführt werden. Wenn mit Öl geschmiert wird, ist die radiale Öffnung 9 nicht notwendig, sondern eher nachteilig, da Verunreinigungen durch diese in den Stangenführungsabschnitt 11 eindringen können. Da normalerweise mit Öl geschmiert wird, ist vorzugsweise von einer Radialöffnung 9 abzusehen.

In Fig. 2 ist als zweites Ausführungsbeispiel eine zugbelastete bzw. - belastbare erfindungsgemäße Ausgleichsanordnung gezeigt. In Fig. 2 sind nur die wesentlichen, gegenüber Fig. 1 unterschiedlichen Details gezeigt, aus denen hervorgeht, daß die Ausgleichsanordnung gemäß Fig. 2 so aufgebaut ist, daß ein Herausziehen der Stange 2 aus der Hülse 1 möglich ist, es jedoch unmöglich ist, die Stange 2 in die Hülse 1 zu drücken, wie dies bei dem ersten Ausführungsbeispiel der Fall war. Bei dem ersten Ausführungsbeispiel gemäß Fig. 1 konnte die Stange 2 dagegen nicht weiter aus der Hülse 1 herausgezogen werden.

Bei dem zweiten Ausführungsbeispiel ist die Stange 2 etwa vollständig in den Stangenführungsabschnitt 11 eingeführt und die Stange 2 hat in dieser Position etwa auf der Höhe des Absatzes 16 zwischen Stangenführungsabschnitt 11 und Federaufnahmeabschnitt 12 eine radiale Ausnehmung, in die ein Federring 4 eingesetzt ist. In den Gewindeabschnitt 13 sind wiederum zwei Unterlegscheiben 6 mit dazwischenliegender Klemmscheibe 7 eingelegt und mit der Mutter 5 verschraubt. Zwischender der Mutter 5 abgewandten Unterlegscheibe 6 und den Federring 4 ist eine Feder 3 eingeschaltet.

Bei der Ausgleichsanordnung nach Fig. 2 läßt sich die Stange nun gegen die Kraft der Feder 3 aus der Hülse 1 herausziehen, bis die Feder 3 vollständig zusammengelegt ist.

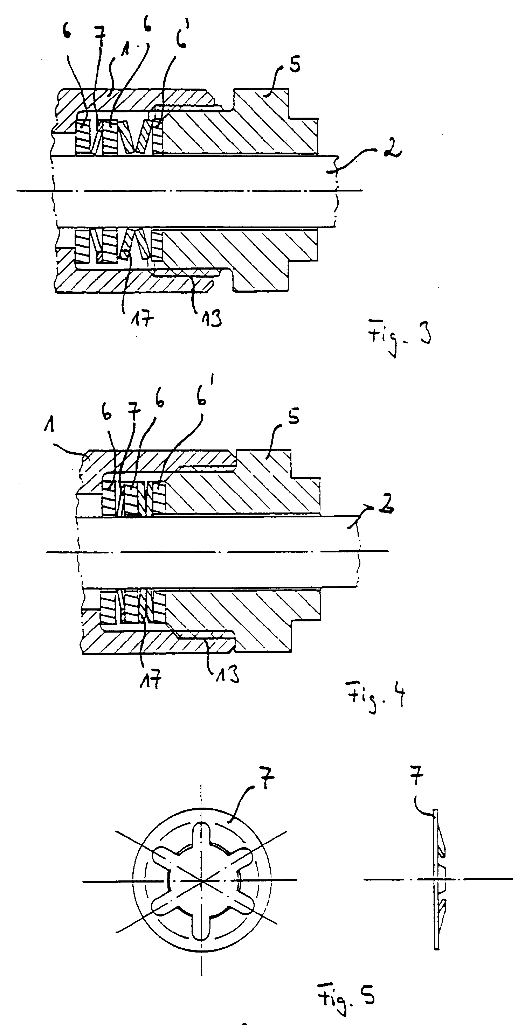

Die Figuren 3 und 4 zeigen eine weitere Ausführungsform einer erfindungsgemäßen Ausgleichsanordnung mit einer gegenüber den Ausführungsformen der Figuren 1 und 2 unterschiedlichen Ausgestaltung der Klemmeinrichtung. Diese andere Art der Klemmeinrichtung ist auf sowohl die druckbelastete als auch die zugbelastete Version der Ausgleichsanordnung anwendbar. Dabei zeigt die Figur 3 im Detail die Klemmeinrichtung in einem entspannten Zustand, bei dem die Mutter 5 noch nicht vollständig in den Gewindeabschnitt 13 der Hülse 1 eingeschraubt ist und Figur 4 zeigt die Klemmeinrichtung im radial klemmenden Zustand, bei dem die Mutter 5 vollständig bis zum Anschlag in den Gewindeabschnitt 13 eingeschraubt ist.

Die Klemmeinrichtung gemäß den Figuren 3 und 4 unterscheidet sich von der der Figuren 1 und 2 dahingehend, daß zwischen die Unterlegscheibe 6, die auf der der Mutter 5 zugewandten Seite der Radialklemmscheibe 7 liegt, und die Mutter 5 eine weitere Unterlegscheibe 6′ und ein Tellerfederpaket 17 eingelegt sind.

Ein wesentlicher Vorteil bei der Zwischenschaltung des Tellerfederpaketes liegt darin, daß mit der durch die Tellerfedern aufgebrachten Vorspannung eine permanent gleichmäßige Anpressung der Radialklemmscheibe 7 auf die Stange 2 sichergestellt wird. Dies ist insbesondere dann von Vorteil, wenn die Hülse 1 und/oder die Mutter 5 aus Kunststoff hergestellt sind, da der Kunststoffwerkstoff bei ständiger Belastung zum Kriechen neigt. Dadurch könnte die Vorspannung ohne Zwischenschaltung des Tellerfederpaketes mit der Zeit abfallen, was zu einer Beeinträchtigung der Funktion führen könnte.

Figur 4 zeigt eine Drauf- und eine Seitenansicht der Radialklemmscheibe 7, die bei der Klemmeinrichtung gemäß den Figuren 3 und 4 verwendet wird. Die Radialklemmscheibe 7 hat eine sternförmige Durchbrechung und besteht aus einem federnden Material. Die radial nach innen zeigenden Zacken der sternförmigen Durchbrechung, die üblicherweise nicht spitz ausgeformt, sondern entsprechend dem Durchmesser der Stange 2 konkav abgeflacht sind, sind im entspannten Zustand axial abgebogen. Durch die axiale Abbiegung ist der durch die radial innersten Abschnitte der Sternzacken gebildete Durchmesser etwas größer als der Durchmesser der Stange 2, so daß sich die Radialklemmscheibe 7 im entspannten Zustand frei axial auf der Stange 2 bewegen läßt. Wenn die Radialklemmscheibe 7 nun axial zusammengedrückt wird, verringert sich der freie Durchmesser, so daß ein radialer Druck auf die Stange 2 ausgeübt und diese somit bezüglich ihrer axialen Lage fixiert wird.

Figur 6 ist eine schematische Darstellung einer bevorzugten Anwendung der Ausgleichsanordnung gemäß Figur 2. Hier wird die Ausgleichsanordnung dazu verwendet, eine definierte Entfernung zwischen einem Bedienhebel 21, der z. B. mit dem Gaspedal im Auto verbunden sein kann, und einem Bewegungshebel 20 herzustellen, der beispielsweise die Drosselklappenöffnung eines Vergasers verstellt. Der Bewegungshebel 20 hat einen Anschlag 22 und soll aus Toleranzgründen bei der genannten Entfernung zwischen Bedienhebel und Bewegungshebel eine solche Lage einnehmen, daß zwischen Bewegungshebel 20 und Anschlag 22 ein definierter Toleranzspalt verbleibt. Dieser kann während des Einbaus der Ausgleichsanordnung durch eine Einstellehre 23 gewährleistet werden, die zwischen Anschlag 22 und Bewegungshebel 20 eingeführt wird.

Für diese Art von Verbindung bietet sich die Anwendung der Ausgleichsordnung gemäß Figur 2 an. Für den Einbau wird zunächst die Mutter 5 gelöst, so daß die Stange 2 gegenüber der Hülse 1 bewegbar ist. Dann wird einer der Kugelpfannenansätze 8 oder 14 der Hülse 1 bzw. der Stange 2 auf einen entsprechenden Kugelansatz des Bedienhebels 21 oder des Bewegungshebels 21 aufgesetzt. Nun wird die Einstellehre 23 zwischen Anschlag 22 und Bewegungshebel 20 gelegt. Die Stange 2 wird nun gegen die Kraft der Feder 3 aus der Hülse 1 so weit herausgezogen, daß der noch nicht festgelegte Kugelpfannenansatz 8 bzw. 14 auf den noch nicht belegten Kugelansatz von Bewegungshebel 20 oder Bedienhebel 21 aufgebracht werden kann. Dies kann mit einer Hand geschehen, während die andere Hand eines Monteurs die Einstellehre 23 zwischen Anschlag 22 und Bewegungshebel 20 hält. Nach dem Aufbringen zieht die unter Druck stehende Feder 3 den Bewegungshebel 20 gegen die Einstellehre 23, so daß der Monteur diese loslassen kann. Nun hat der Monteur beide Hände frei, um die Mutter 5 in die Hülse 1 zu schrauben. Hierzu können sowohl an der Mutter 5 als auch außenumfänglich der Hülse 1 entsprechend geformte Abschnitte zum Ansetzen von Schlüsseln vorgesehen sein. Wenn die Mutter 5 bis zum Anschlag in die Hülse 1 eingeschraubt ist, ist die Stange 2 gegenüber der Hülse 1 axial durch die Klemmeinrichtung, also die Klemmscheibe 7 fixiert und die Einstellehre 23 kann zwischen Bewegungshebel 20 und Anschlag 22 herausgezogen werden.

Es ist klar, daß bei Anwendungen, bei denen der Anschlag 22 nicht unter dem Bewegungshebel 20 liegt, wie es in Figur 6 gezeigt ist, sondern darüber, die Ausführungsform der Figur 1 eine entsprechende Anwendung finden kann. In diesem Fall wird die Anordnung zum Aufsetzen auf entsprechende Kugelansätze an Bewegungshebel 20 und Bedienhebel 21 zusammengedrückt, so daß die dann wirkende Druckkraft der Figur 3 die Einstellehre 23 zwischen Bewegungshebel 20 und darüberliegendem Ansatz 22 halten würde. Auch in diesem Fall hat der Monteur beide Hände frei, um die Verschraubung der Mutter 5 gegen die Hülse 1 vorzunehmen.

## Patentansprüche

1. Ausgleichsanordnung mit einer Hülse (1) und einer in der Hülse axial zu dieser verstellbaren Stange (2), deren axiale Position bezüglich der Hülse (1) mit einer radial wirkenden Klemmeinrichtung festgelegt ist, **dadurch gekennzeichnet**, daß zwischen Hülse (1) und Stange (2) eine axial wirkende Federeinrichtung (3) derart geschaltet ist, daß die Anordnung beim Verstellen druck- oder zugbelastet ist.

2. Ausgleichsanordnung nach Anspruch 1, **dadurch gekennzeichnet**, daß die Hülse (1) eine axiale Vertiefung hat, in der die Stange (2) axial geführt wird.

3. Ausgleichsanordnung nach Anspruch 2, **dadurch gekennzeichnet**, daß die Federeinrichtung eine auf die Stange (2) aufgeschobene Schraubenfeder (3) ist, die einerseits an einem Absatz (16) in der Vertiefung und andererseits an einer radialen Erweiterung (4) der Stange (2) anliegt, wobei die Erweiterung (4) im Ausgangszustand an einem Verschluß der Vertiefung anliegt und die Ausgleichsanordnung auf Druck belastbar ist.

4. Ausgleichsanordnung nach Anspruch 2, **dadurch gekennzeichnet**, daß die Federeinrichtung eine auf die Stange (2) aufgeschobene Schraubenfeder (3) ist, die einerseits an einem Verschluß der Vertiefung und andererseits an einer radialen Erweiterung (4) der Stange anliegt, wobei die Erweiterung (4) im Ausgangszustand an einem Absatz (16) in der Vertiefung anliegt und die Ausgleichsanordnung auf Zug belastbar ist.

5. Ausgleichsanordnung nach Anspruch 2, 3 oder 4, **dadurch gekennzeichnet**, daß die Vertiefung eine gestufte Bohrung ist, die öffnungsseitig einen Gewindeabschnitt (13) hat, in den eine Mutter (5) mit axial zentraler Durchbrechung zur Aufnahme der Stange (2) geschraubt ist.

6. Ausgleichsanordnung nach Anspruch 5, **dadurch gekennzeichnet**, daß die Bohrung nach innen von dem öffnungsseitigen Gewindeabschnitt (13) über einen Absatz (15) in einen Federaufnahmeabschnitt (12) geringeren Durchmessers übergeht und daß die Klemmeinrichtung zumindest aus zwei Unterlegscheiben (6, 6) und einer dazwischen liegenden Radialklemmscheibe (7) mit jeweils mittiger Durchbrechung gebildet ist, die vor der Mutter (5) auf die Stange (2) aufgeschoben und von der Mutter (5) gegen den Absatz (15) drückbar sind.

7. Ausgleichsanordnung nach Anspruch 6, **dadurch gekennzeichnet**, daß die Radialklemmscheibe (7) aus federndem Material besteht und eine sternförmige Durchbrechung hat, wobei die radial nach innen zeigenden Zacken der Durchbrechung in axialer Richtung abgebogen sind und solche Abmessungen haben, daß die Radialklemmscheibe (7) ohne äußere Krafteinwirkung frei auf der Stange (2) verschiebbar ist und sich die Sternzacken gegen die Stange (2) verklemmen, wenn die Radialklemmscheibe (7) axial zusammengedrückt ist.

8. Ausgleichsanordnung nach Anspruch 6 oder 7, **dadurch gekennzeichnet**, daß zwischen der einen Unterlegscheibe und der Mutter eine weitere Unterlegscheibe (6′) und eine Tellerfeder oder ein Tellerfederpaket (17) angeordnet sind.

9. Ausgleichsanordnung nach einem der Ansprüche 3 bis 7, **dadurch gekennzeichnet**, daß die radiale Erweiterung der Stange durch einen Sprengring (4) gebildet ist, der in eine radiale Ausnehmung der Stange (2) eingesetzt ist.

10. Ausgleichsanordnung nach einem der Ansprüche 1 bis 9, **dadurch gekennzeichnet**, daß die Hülse (1) und die Stange (2) jeweils mit einem Kugelpfannenansatz (8, 14) versehen sind.

## Claims

1. Component-alignment device comprising a sleeve (1) and a rod (2) axially displaceable in the sleeve, the axial position of which relative to the sleeve (1) is determined by a radially acting clamp, characterised in that an axially acting spring (3) is located between the sleeve (1) and the rod (2) in such a manner that the device is subjected to a compressive or tensile load during displacement of the rod.

2. Component-alignment device according to claim 1, characterised in that the sleeve (1) has an axial recess in which the rod (2) is axially guided.

3. Component-alignment device according to claim 2, characterised in that the spring is a helical spring (3) slipped on to the rod (2) bearing at one end against a shoulder (16) in the recess and at the other end against a radial expanded portion (4) of the rod (2), the expanded portion (4) bearing against a closure element for the recess in the initial state and the component-alignment device being capable of bearing a compressive load.

4. Component-alignment device according to claim 2, characterised in that the spring is a helical spring (3) slipped on to the rod (2) bearing at one end against a closure element for the recess and at the other end against a radial expanded portion (4) of the rod (2), the expanded portion (4) bearing against a shoulder (16) in the recess in the initial state and the component-alignment device being capable of bearing a tensile load.

5. Component-alignment device according to claim 2, 3 or 4, characterised in that the recess is a stepped bore provided at its opening end with a threaded portion (13) into which a nut (5) with an axially central hole for receiving the rod (2) is screwed.

6. Component-alignment device according to claim 5, characterised in that the bore leads towards the interior from the threaded portion (13) at the opening end via a shoulder (15) into a spring receiving portion (12) with a smaller diameter and that the clamp is formed of at least two washers (6, 6) and a radial clamping plate (7) situated therebetween, each with a central hole, which are slipped on to the rod (2) before the nut (5) and can be pressed against the shoulder (15) by the nut (5).

7. Component-alignment device according to claim 6, characterised in that the radial clamping plate (7) consists of resilient material and has a star-shaped hole, the radially inwardly directed points of the hole being bent in the axial direction and having dimensions such that the radial clamping plate (7) is freely displaceable on the rod (2) without the external application of force and the points of the star are jammed against the rod (2) when the radial clamping plate (7) is axially compressed.

8. Component-alignment device according to claim 6 or claim 7, characterised in that another washer (6**′**) and a disc spring or a disc spring assembly (17) are arranged between the first washer and the nut.

9. Component-alignment device according to one of claims 3 to 7, characterised in that the radial expanded portion of the rod is formed by a snap ring (4) which is inserted into a radial slot in the rod (2).

10. Component-alignment device according to one of claims 1 to 9, characterised in that the sleeve (1) and the rod (2) are each provided with a ball socket attachment (8, 14).

## Revendications

1. Dispositif de compensation comportant une douille (1) et une tige (2) déplaçable axialement dans la douille, par rapport à cette dernière, et dont la position axiale par rapport à la douille (1) est fixée au moyen d'un dispositif de serrage à action radiale, caractérisé en ce qu'un dispositif à ressort (3) agissant radialement est disposé entre la douille (1) et la tige (2) de telle sorte que le dispositif de compensation est chargé en compression ou en traction lors du déplacement.

2. Dispositif de compensation selon la revendication 1, caractérisé en ce que la douille (1) possède un renfoncement radial, dans lequel la tige (2) est guidée axialement.

3. Dispositif de compensation selon la revendication 2, caractérisé en ce que le dispositif à ressort est un ressort hélicoïdal (3) emmanché sur la tige (2) et qui s'applique d'une part contre une partie étagée (16) située dans le renfoncement et d'autre part contre une partie radiale élargie (4) de la tige (2), la partie élargie (4) s'appliquant, à l'état initial, contre un élément de fermeture du renfoncement, et le dispositif de compensation pouvant être chargé en pression.

4. Dispositif de compensation selon la revendication 2, caractérisé en ce que le dispositif à ressort est un ressort hélicoïdal (3) emmanché sur la tige (2) et qui s'applique d'une part contre un élément de fermeture du renfoncement et d'autre part contre une partie radiale élargie (4) de la tige, la partie élargie (4) s'appliquant, à l'état initial, contre une partie étagée (16) située dans le renfoncement, et le dispositif de compensation pouvant être chargé en traction.

5. Dispositif de compensation selon la revendication 2, 3 ou 4, caractérisé en ce que le renfoncement est un perçage étagé, qui possède, du côté de son ouverture, une partie taraudée (13), dans laquelle est vissé un boulon (5) possédant un passage axial central servant à loger la tige (2).

6. Dispositif de compensation selon la revendication 5, caractérisé en ce que le perçage se prolonge vers l'intérieur à partir de la partie filetée (13) située du côté de l'ouverture, par une partie de diamètre réduit (12) logeant le ressort, par l'intermédiaire d'une partie étagée (15), et que le dispositif de serrage est formé au moins par deux rondelles (6,6) et un disque de serrage radial (7) intercalé entre les rondelles et possédant respectivement un passage central qui est emmanché, avant le boulon (5), sur la tige (2) et peut être repoussé par le boulon (5) contre la partie étagée (15).

7. Dispositif de compensation selon la revendication 6, caractérisé en ce que le disque de serrage radial (7) est réalisé en un matériau élastique et possède un passage en forme d'étoile, les dents du passage, qui sont dirigées radialement vers l'intérieur, étant coudées dans la direction axiale et possédant des dimensions telles que le disque de serrage radial (7) peut être déplacé librement sur la tige (2) sans l'action d'une force extérieure et que les pointes de l'étoile se bloquent contre la tige (2) lorsque le disque de serrage radial (7) est comprimé axialement.

8. Dispositif de compensation selon la revendication 6 ou 7, caractérisé en ce qu'entre une rondelle et le boulon sont disposés une autre rondelle (6′) et un ressort Belleville ou un paquet de ressorts Belleville (17).

9. Dispositif de compensation selon l'une des revendications 3 à 7, caractérisé en ce que la partie radiale élargie de la tige est formée par un jonc (4), qui est inséré dans un évidement radial de la tige (2).

10. Dispositif de compensation selon l'une des revendications 1 à 9, caractérisé en ce que la douille (1) et la tige (2) sont pourvues chacune d'un embout saillant en forme de coussinet sphérique (8,14).
